# EUROPEAN PATENT SPECIFICATION

(11) **EP 2 386 738 B1**
(45) Date of publication and mention of the grant of the patent: **22.07.2015**
(21) Application number: 11164967.9
(22) Date of filing: 05.05.2011
(51) Int. Cl.: F01N 3/20, F01N 3/28

(54) **Compact reduction agent doser for use in an SCR system of an internal combustion engine**
Kompakte Dosiereinrichtung für Reduktionsmittel zur Verwendung in einem SCR-System eines Verbrennungsmotors
Doseur d'agent réducteur compact à utiliser dans un système SCR de moteur à combustion interne

(30) Priority: 10.05.2010 US 776475
(43) Date of publication of application: 16.11.2011
(73) Proprietor: DEERE & COMPANY, Moline, Illinois 61265-8098 (US)
(72) Inventor: Winsor, Richard E., Waterloo, IA 50701 (US)
(74) Representative: John Deere GmbH & Co. KG

(56) References cited:
- JP-A- 6 210 135
- JP-A- 10 030 431
- JP-A- 2009 114 930
- US-A1- 2003 070 424

## Description

The present invention relates to internal combustion engines, and, more specifically, to exhaust aftertreatment of such engines.

A vehicle such as a work machine in the form of a construction work machine, an agricultural work machine or a forestry work machine, typically includes a power unit in the form of an internal combustion (IC) engine. The IC engine may either be in the form of a compression ignition engine (i.e., diesel engine) or a spark ignition engine (i.e., gasoline engine). For most heavy work machines, the power unit is in the form of a diesel engine having better lugging, pull-down and torque characteristics for associated work operations.

The Environmental Protection Laws enacted in the United States decades ago have imposed ever increasing limits on permitted emissions from IC engines. The diesel engine has enjoyed a position of being a durable and fuel efficient engine thus making it the engine of choice for commercial, industrial and agricultural use. As emissions limits have been lowered, it becomes increasingly more difficult to meet the standards with a diesel engine.

Diesel engines provide advantages in fuel economy, but produce and emit both NOx and particulates during normal operation. When primary measures (actions that affect the combustion process itself, such as exhaust gas recirculation and engine timing adjustments) are taken to reduce one, often the other is increased. Thus, combustion conditions selected to reduce pollution from particulates and obtain good fuel economy tend to increase the output of NOx. Current and proposed regulations and legislation present significant challenges to manufacturers to achieve good fuel economy while at the same time reducing the emission levels of particulates and NOx.

In order to meet such requirements or restrictions, a method known as selective catalytic reduction (SCR) has been used for reducing the emission of NOx. The SCR method consists of injecting gaseous ammonia (NH3), ammonia in aqueous solution or aqueous urea, or ammonia supplied from an ammonia generator using a solid source of ammonia such as ammonia carbamate or ammonia carbonate, into the exhaust gas system of the compression ignition engine as a reduction agent. When the temperature of the exhaust gas stream is above a reaction temperature, for example a temperature above 160°C for aqueous urea, the reduction agent undergoes a hydrolysis process and is decomposed into ammonia and CO₂. As the exhaust gas stream is passed through the SCR catalyst, the gaseous ammonia reacts with the NOx to reduce the NOx to molecular nitrogen. This reduces or limits the NOx emissions from the compression ignition engine.

In an SCR system as described above, the ammonia is typically provided by evaporating and decomposing a urea-water solution that is now referred to as a diesel emission fluid (DEF). In a typical SCR system, the DEF is sprayed onto a mixer in an exhaust pipe and a further length of exhaust pipe (typically 0.5 m to 1.0 m) is provided after the mixer to complete the mixing before entering the SCR catalytic reactor. An SCR system of this conventional design requires considerable space and adds cost.

JP 10 030 431 A discloses a denitrating device that houses honeycombed denitration agents. Exhaust gas flows through the device and a reduction agent is atomized by a nozzle. A shield plate is arranged in a position opposing the nozzle. A porous plate is arranged between the shield plate and the denitrating agents.

JP 06 210 135 A discloses an exhaust gas purifying device that houses a NOₓ reducing catalyst arranged in an exhaust gas passage. Upstream of the NOₓ reducing catalyst a device for adding hydrocarbons and a distributor is located. Furthermore a target-plate-baffle arrangement is provided.

US 2003/0070424 A discloses a selective catalytic reduction device with a housing. An injector in the housing injects aqueous urea solution. A nonporous inertial impactor is provided in the housing between injector and catalyst.

It is therefore the object of the present invention to provide a cost-effective doser using less space, an internal combustion engine and system using such doser.

This object is met according to the invention by the teaching of claim 1, 7 or 9 respectively, while features developing the solution in an advantageous manner are set forth in the further claims.

The invention in one form is directed to a reduction agent doser for use in an emissions control system for an IC engine. The reduction agent doser includes a tubular housing with an inside diameter; a target plate positioned crosswise in the housing and terminating at a distance from the inside diameter of the housing, the target plate directing a flow of exhaust gas in a radially outward direction; a baffle positioned crosswise in the housing downstream from the target plate, the baffle terminating at the inside diameter of the housing and including a center opening for directing a flow of exhaust gas in a radially inward direction; and a diffuser plate located downstream from the baffle, the diffuser plate terminating at the inside diameter of the housing.

The invention in another form is directed to an IC engine including an engine block with a plurality of combustion cylinders. An exhaust system receives exhaust gases from the combustion cylinders. The exhaust system includes an exhaust manifold and an exhaust conduit for conducting the exhaust gas from the engine. An emissions control system includes a reduction agent doser and a catalytic reactor. The reduction agent doser has a tubular housing with an inside diameter. A target plate is positioned crosswise in the housing and terminates at a distance from the inside diameter of the housing. The target plate directs a flow of the exhaust gas in a radially outward direction. A baffle is positioned crosswise in the housing downstream from the target plate. The baffle terminates at the inside diameter of the housing and includes a center opening for directing a flow of the exhaust gas in a radially inward direction. A diffuser plate is located downstream from the baffle, and terminates at the inside diameter of the housing. A catalytic reactor is coupled with a downstream side of the reduction agent doser.

The invention in yet another form is directed to an SCR system for use with an IC engine, including a reduction agent doser and a catalytic reactor. The reduction agent doser includes a tubular housing with an inside diameter. A target plate is positioned crosswise in the housing and terminates at a distance from the inside diameter of the housing. The target plate directs a flow of exhaust gas in a radially outward direction. A baffle is positioned crosswise in the housing downstream from the target plate. The baffle terminates at the inside diameter of the housing and includes a center opening for directing a flow of exhaust gas in a radially inward direction. A diffuser plate is located downstream from the baffle. The diffuser plate terminates at the inside diameter of the housing. A catalytic reactor is directly coupled with a downstream side of the reduction agent doser.

An embodiment of the invention described below is shown in the drawings, in which
- Fig. 1: is a schematic illustration of an embodiment of an SCR system of the present invention for use with an IC engine; and
- Fig. 2: is a sectional view of the reduction agent doser shown in Fig. 1, taken along line 2-2.

Referring now to the drawings, there is shown an embodiment of an IC engine 10 which includes an SCR system 12 for reducing exhaust emissions to the ambient environment. IC engine 10 is presumed to be a diesel engine in the illustrated embodiment, and includes an engine block 14 with a plurality of combustion cylinders 16. Engine block 14 is shown with four combustion cylinders 16, but may have any suitable number of combustion cylinders depending upon the engine, such as two, six, or eight cylinders. IC engine 10 also includes an intake manifold 18 and an exhaust manifold 20 which are each in fluid communication with the plurality of combustion cylinders 16. Intake manifold 18 receives and provides a source of combustion air to the plurality of combustion cylinders 16. Exhaust manifold 20 receives exhaust gases from the plurality of combustion cylinders 16 and discharges the exhaust gases through an exhaust conduit 22 to the downstream SCR system 12.

SCR system 12 generally includes a reduction agent doser 24 and a catalytic reactor 26. Reduction agent doser 24 is assumed to be a urea doser in the illustrated embodiment. Reduction agent doser 24 includes a tubular housing 28 in which are disposed a reduction agent injector 30, target plate 32, baffle 34, and diffuser plate 36. The structure and arrangement of reduction agent doser 24 is such that the various components thereof cause the exhaust gases to flow in radially outward and radially inward directions, thereby providing a sufficient latency period for proper mixing of the DEF and exhaust gas within reduction agent doser 24 prior to flowing into catalytic reactor 26. This reduces the area required by reduction agent doser 24 while still maintaining adequate mixing of the DEF with the exhaust gases.

Reduction agent injector 30 injects a fluid reduction agent, such as DEF, toward target plate 32. The particular configuration and impingement angle of reduction agent injector 30 may vary, depending upon the application.

Target plate 32 generally provides an impingement surface for the DEF which is mixed with the exhaust gases. Target plate 32 is positioned crosswise within housing 28 and terminates at a distance from the inside diameter of housing 28. For example, target plate 32 may be supported by a plurality of stand-off rods 38 which centrally locate the circular disk-shaped target plate 32 within the circular inside diameter of housing 28. The particular diameter of target plate 32 may be selected according to desired flow characteristics, flow rate, etc. Moreover, it is possible that target plate 32 need not be a circular, disk-shaped plate but, rather, have another shape for a particular application, such as octagonal or hexagonal.

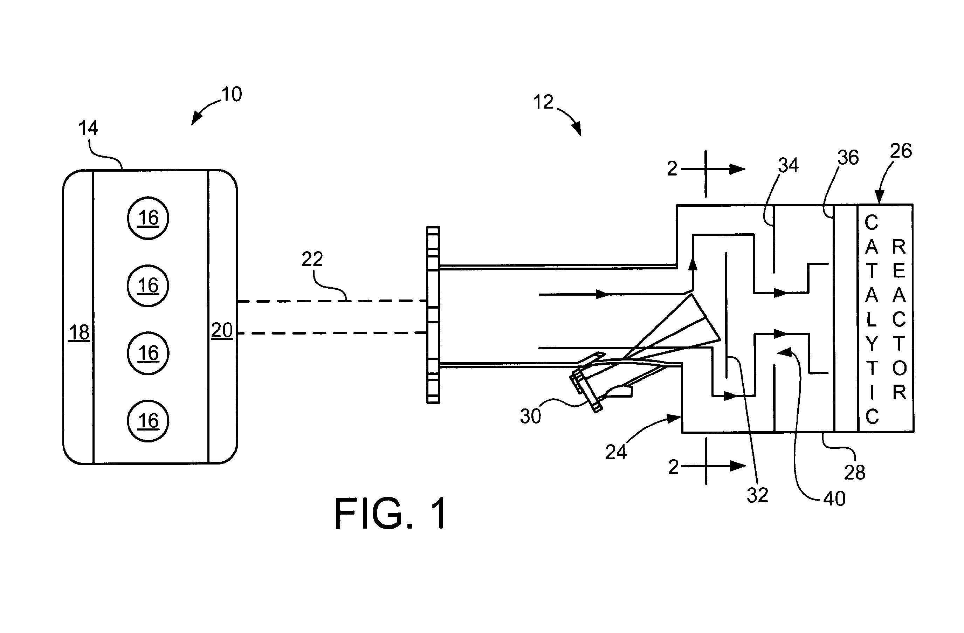

Baffle 34 is likewise positioned crosswise with housing 28 at a location which is downstream from target plate 32. Baffle 34 terminates at (i.e., extends to) the inside diameter of housing 28 and includes a center opening 40 for directing a flow of the exhaust gas in a radially inward direction. In the embodiment shown, baffle 34 has an annular shape and center opening 40 is a concentrically positioned, circular opening with an inside diameter which is smaller than the outside diameter of target plate 32. Thus, as shown in Fig. 1, the exhaust gases first flow in a radially outward direction around target plate 32 and then in a radially inward direction to pass through center opening 40.

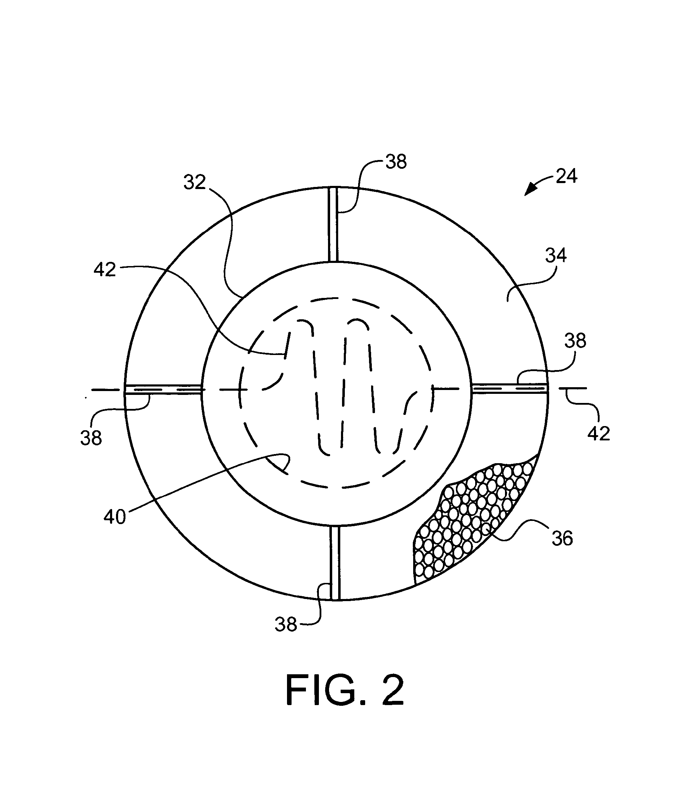

Diffuser plate 36 is located downstream from baffle 34 and also terminates at the inside diameter of housing 28. Diffuser plate 36 functions to distribute the exhaust gases mixed with DEF in a more uniform manner across diffuser plate 36. Referring to Fig. 2, a portion of baffle 34 has been fragged out to illustrate the perforations within diffuser plate 36. These perforations may be of the same diameter, or may vary across the face of diffuser plate 36. Likewise, diffuser plate 36 need not have pass-through perforations but, rather, may be differently configured to diffuse the flow of exhaust gases and DEF, such as by using a lattice structure, etc.

Catalytic reactor 26 may be of conventional design, and is directly coupled to the downstream side of reduction agent doser 24. Catalytic reactor 26 preferably has a flow path diameter which is approximately the same as the inside diameter of housing 28.

During operating, exhaust gases are transported from exhaust manifold 20, through exhaust conduit 22, to SCR system 12. A DEF is injected against target plate 32 at a desired flow velocity and impingement angle. The DEF and exhaust gases flow in a radially outward direction around target plate 32 and then in a radially inward direction toward center opening 40 of baffle 34. This generally serpentine-type flow path provides a sufficient latency period for adequate mixing of the DEF with the exhaust gases. The mixed DEF and exhaust gases are diffused by diffuser plate 36 and flow into catalytic reactor 26 where a catalytic reaction occurs in known manner.

In the embodiment of SCR system 12 shown and described above, the mixing of the DEF with the exhaust gases occurs because of the mixing time associated with the longer flow path. To further assist in mixing of the DEF with the exhaust gases, an optional heater (such as a resistive type heater) 42 (shown in dashed lines in Fig. 2) may be provided at the rear or face of target plate 32.

Having described the preferred embodiment, it will become apparent that various modifications can be made without departing from the scope of the invention as defined in the accompanying claims.

## Claims

1. A reduction agent doser (24) for use in an emissions control system for an internal combustion engine (10), said reduction agent doser (24) comprising a tubular housing (28) with an inside diameter; a target plate (32) is positioned crosswise in said housing (28) and terminating at a distance from said inside diameter of said housing (28), said target plate (32) directing a flow of exhaust gas in a radially outward direction; a baffle (34) positioned crosswise in said housing (28) downstream from said target plate (32), said baffle (34) terminating at said inside diameter of said housing (28) and including a center opening (40) for directing a flow of exhaust gas in a radially inward direction; and a diffuser plate (36) located downstream from said baffle (34), said diffuser plate (36) terminating at said inside diameter of said housing (28) **characterized in that** said center opening (40) has an inside diameter which is smaller than an outside diameter of said target plate (32).

2. The reduction agent doser according to claim 1, **characterized in that** said target plate (32) is a circular disk-shaped plate, and said baffle (34) is annular shaped with a circular center opening (40).

3. The reduction agent doser according to claim 1 or 2, **characterized in that** said target plate (32) is a heated target plate.

4. The reduction agent doser according to one of the previous claims, **characterized in that** said diffuser plate (36) is a perforated plate.

5. The reduction agent doser according to one of the previous claims, **characterized by** a reduction agent injector (30) for injecting a fluid reduction agent toward said target plate (32).

6. The reduction agent doser according to one of the previous claims, **characterized in that** said reduction agent doser (24) is a urea doser.

7. An internal combustion engine (10), comprising an engine block (14) including a plurality of combustion cylinders; an exhaust system for receiving exhaust gases from said combustion cylinders, said exhaust system including an exhaust manifold (18) and an exhaust conduit (20) for conducting exhaust gas from the engine (10); and an emissions control system (12), **characterized by** a reduction agent doser (24) according to one of the previous claims, a catalytic reactor (26) being coupled with a downstream side of said reduction agent doser (24).

8. The internal combustion engine according to claim 7, **characterized in that** said catalytic reactor (26) has a flow path diameter which is approximately the same as said inside diameter of said housing (28).

9. A selective catalytic reduction system (12) for use with an internal combustion engine (10), **characterized by** a reduction agent doser (24) according to one of the claims 1 to 6, a catalytic reactor (26) being directly coupled with a downstream side of said reduction agent doser (24).

## Patentansprüche

1. Reduktionsmittel-Dosiereinrichtung (24) zur Verwendung in einem Emissionssteuerungssystem für einen Verbrennungsmotor (10), wobei die Reduktionsmittel-Dosiereinrichtung (24) umfasst: ein rohrförmiges Gehäuse (28) mit einem inneren Durchmesser; eine Zielplatte (32), die sich quer im Gehäuse (28) erstreckt und in einem Abstand von dem inneren Durchmesser des Gehäuses (28) endet, wobei die Zielplatte (32) eine Strömung von Abgas in eine Richtung radial nach außen leitet; ein Leitblech (34), das quer in dem Gehäuse (28) stromabwärts der Zielplatte (32) angeordnet ist, wobei das Leitblech (34) an dem inneren Durchmesser des Gehäuses (28) endet und eine zentrale Öffnung (40) zum Leiten einer Strömung von Abgas in eine radiale Richtung nach innen aufweist; und ein Verteilblech (36), das stromabwärts des Leitblechs (34) angeordnet ist, wobei das Verteilblech (36) am inneren Durchmesser des Gehäuses (28) endet, **dadurch gekennzeichnet, dass** die zentrale Öffnung (40) einen inneren Durchmesser aufweist, der kleiner als ein Außendurchmesser der Zielplatte (32) ist.

2. Reduktionsmittel-Dosiereinrichtung nach Anspruch 1, **dadurch gekennzeichnet, dass** die Zielplatte (32) eine runde scheibenförmige Platte ist, und dass das Leitblech (34) ringförmig mit einer kreisförmigen zentralen Öffnung (40) ist.

3. Reduktionsmittel-Dosiereinrichtung nach Anspruch 1 oder 2, **dadurch gekennzeichnet, dass** die Zielplatte (32) eine beheizte Zielplatte ist.

4. Reduktionsmittel-Dosiereinrichtung nach einem der vorhergehenden Ansprüche, **dadurch gekennzeichnet, dass** das Verteilblech (36) eine perforierte Platte ist.

5. Reduktionsmittel-Dosiereinrichtung nach einem der vorhergehenden Ansprüche, **gekennzeichnet durch** eine Reduktionsmittel-Einspritzeinrichtung (30) zum Einspritzen eines Fluidreduktionsmittels in Richtung der Zielplatte (32).

6. Reduktionsmittel-Dosiereinrichtung nach einem der vorhergehenden Ansprüche, **dadurch gekennzeichnet, dass** die Reduktionsmittel-Dosiereinrichtung (24) eine Harnstoff-Dosiereinrichtung ist.

7. Verbrennungsmotor (10), umfassend einen Motorblock (14), der mehrere Verbrennungszylinder aufweist; ein Abgassystem zum Aufnehmen von Abgasen aus den Verbrennungszylindern, wobei das Abgassystem einen Abgaskrümmer (18) und eine Abgasleitung (20) zum Leiten von Abgas von dem Motor (10) aufweist; und ein Emissionssteuersystem (12), **gekennzeichnet durch** eine Reduktionsmittel-Dosiereinrichtung (24) nach einem der vorhergehenden Ansprüche, wobei ein katalytischer Reaktor (26) mit einer stromabwärtigen Seite der Reduktionsmittel-Dosiereinrichtung (24) gekoppelt ist.

8. Verbrennungsmotor nach Anspruch 7, **dadurch gekennzeichnet, dass** der katalytische Reaktor (26) einen Durchflussdurchmesser aufweist, der etwa dem inneren Durchmesser des Gehäuses (28) entspricht.

9. Selektives katalytisches Reduktionssystem (12) zur Verwendung mit einem Verbrennungsmotor (10), **gekennzeichnet durch** eine Reduktionsmittel-Dosiereinrichtung (24) nach einem der Ansprüche 1 bis 6, wobei ein katalytischer Reaktor (26) direkt mit einer stromabwärtigen Seite der Reduktionsmittel-Dosiereinrichtung (24) gekoppelt ist.

## Revendications

1. Dispositif de dosage d'agent réducteur (24) destiné à être utilisé dans un système antipollution pour un moteur à combustion interne (10), ledit dispositif de dosage d'agent réducteur (24) comprenant un logement tubulaire (28) présentant un diamètre intérieur ; une plaque formant cible (32) est positionnée de manière transversale dans ledit logement (28) et se termine à une certaine distance dudit diamètre intérieur dudit logement (28), ladite plaque formant cible (32) dirigeant un flux de gaz d'échappement dans une direction allant radialement vers l'extérieur ; une chicane (34) positionnée de manière transversale dans ledit logement (28) en aval de ladite plaque cible (32), ladite chicane (34) se terminant au niveau dudit diamètre intérieur dudit logement (28) et comprenant une ouverture centrale (40) servant à diriger un flux de gaz d'échappement dans une direction allant radialement vers l'intérieur ; et une plaque de diffusion (36) située en aval de ladite chicane (34), ladite plaque de diffusion (36) se terminant au niveau dudit diamètre intérieur dudit logement (28), **caractérisé en ce que** ladite ouverture centrale (40) présente un diamètre intérieur qui est inférieur à un diamètre extérieur de ladite plaque formant cible (32).

2. Dispositif de dosage d'agent réducteur selon la revendication 1, **caractérisé en ce que** ladite plaque formant cible (32) est une plaque en forme de disque circulaire, et ladite chicane (34) est de forme annulaire avec une ouverture centrale (40) circulaire.

3. Dispositif de dosage d'agent réducteur selon la revendication 1 ou 2, **caractérisé en ce que** ladite plaque formant cible (32) est une plaque formant cible chauffée.

4. Dispositif de dosage d'agent réducteur selon l'une des revendications précédentes, **caractérisé en ce que** ladite plaque de diffusion (36) est une plaque perforée.

5. Dispositif de dosage d'agent réducteur selon l'une des revendications précédentes, **caractérisé par** un dispositif d'injection d'agent réducteur (30) servant à injecter un agent réducteur fluide en direction de ladite plaque formant cible (32).

6. Dispositif de dosage d'agent réducteur selon l'une des revendications précédentes, **caractérisé en ce que** ledit dispositif de dosage d'agent réducteur (24) est un dispositif de dosage d'urée.

7. Moteur à combustion interne (10), comprenant un bloc moteur (14) comportant une pluralité de cylindres de combustion ; un système d'échappement destiné à recevoir des gaz d'échappement en provenance desdits cylindres de combustion, ledit système d'échappement comprenant un collecteur d'échappement (18) et une conduite d'échappement (20) servant à acheminer les gaz d'échappement à partir du moteur (10) ; et un système antipollution (12), **caractérisé par** un dispositif de dosage d'agent réducteur (24) selon l'une des revendications précédentes, un convertisseur catalytique (26) étant accouplé à un côté aval dudit dispositif de dosage d'agent réducteur (24).

8. Moteur à combustion interne selon la revendication 7, **caractérisé en ce que** ledit convertisseur catalytique (26) présente un diamètre de trajet d'écoulement qui est approximativement identique audit diamètre intérieur dudit logement (28).

9. Système de réduction catalytique sélective (12) destiné à être utilisé avec un moteur à combustion interne (10), **caractérisé par** un dispositif de dosage d'agent réducteur (24) selon l'une des revendications 1 à 6, un convertisseur catalytique (26) étant directement accouplé à un côté aval dudit dispositif de dosage d'agent réducteur (24).
